# EUROPEAN PATENT APPLICATION

(11) **EP 3 473 952 A1**
(43) Date of publication of application: **24.04.2019**
(21) Application number: 18198765.2
(22) Date of filing: 05.10.2018
(51) Int. Cl.: F25D 17/04, F25D 31/00, A23L 3/015

(54) **APPARATUS FOR PRESERVING FOOD PRODUCTS**

(30) Priority: 17.10.2017 IT 201700116730
(71) Applicant: Salvaro, Marziano, 37024 Negrar (Prov. of Verona) (IT)
(72) Inventor: Salvaro, Marziano, 37024 Negrar (Prov. of Verona) (IT)
(74) Representative: Modiano, Micaela Nadia

(57) **Abstract**

An apparatus for preserving food products, which comprises a supporting structure for at least one preservation unit; the preservation unit comprises a box-like enclosure, which is fastened to the supporting structure and defines internally a compartment which is open toward one side of the supporting structure, and a drawer-like container body, which defines at least one receptacle which is open upward for the placement therein of at least one food product to be preserved; the container body is slideably movable with respect to the box-like enclosure, between a closed condition, in which it is inserted in the compartment, and an open condition, in which it is at least partially extracted from the compartment in order to allow access to the receptacle.

## Description

The present invention relates to an apparatus for preserving food products.

As is known, in order to provide a long-lasting preservation of food products, refrigeration apparatuses are typically used which, by way of keeping the food products at low temperatures, allow to slow the natural process of deterioration.

However, some food products can lose their organoleptic characteristics if they are kept in contact with oxygen and, in particular, with air.

The aim of the present invention is to provide an apparatus for preserving food products which is capable of improving the known art in one or more of the above mentioned aspects.

Within this aim, an object of the invention is to provide an apparatus for preserving food products that allows to preserve the integrity and the organoleptic characteristics of food products for a long time.

Another object of the invention is to provide an apparatus for preserving food products that is structurally very simple.

A further object of the invention is to provide an apparatus for preserving food products which, owing to the peculiar implementation characteristics, is capable of offering the highest guarantees of reliability and safety in use.

A still further object of the present invention is to overcome the drawbacks of the known art in an alternative manner to any existing solutions.

Another object of the invention is to provide an apparatus for preserving food products that is at very low cost.

This aim and these and other objects which will become better apparent hereinafter are achieved by an apparatus for preserving food products, according to claim 1, optionally provided with one or more of the characteristics of the dependent claims.

Further characteristics and advantages of the invention will become better apparent from the description of a preferred, but not exclusive, embodiment of the apparatus according to the invention, which is illustrated by way of non-limiting example in the accompanying drawings wherein:

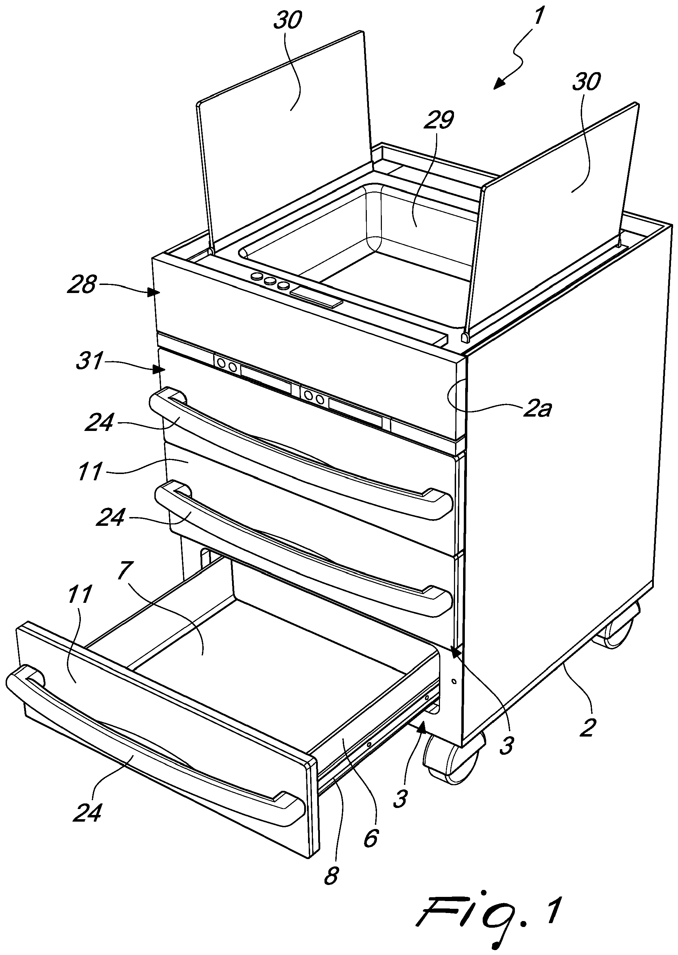

Figure 1 is a perspective view of the apparatus according to the invention;

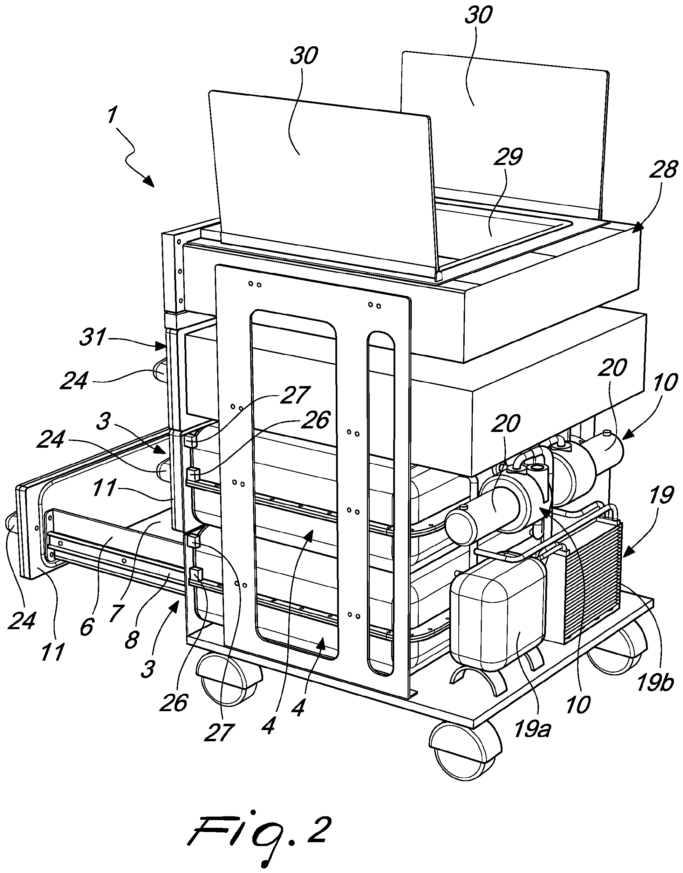

Figure 2 is another perspective view of the apparatus according to the invention with parts omitted to show the inside of the apparatus;

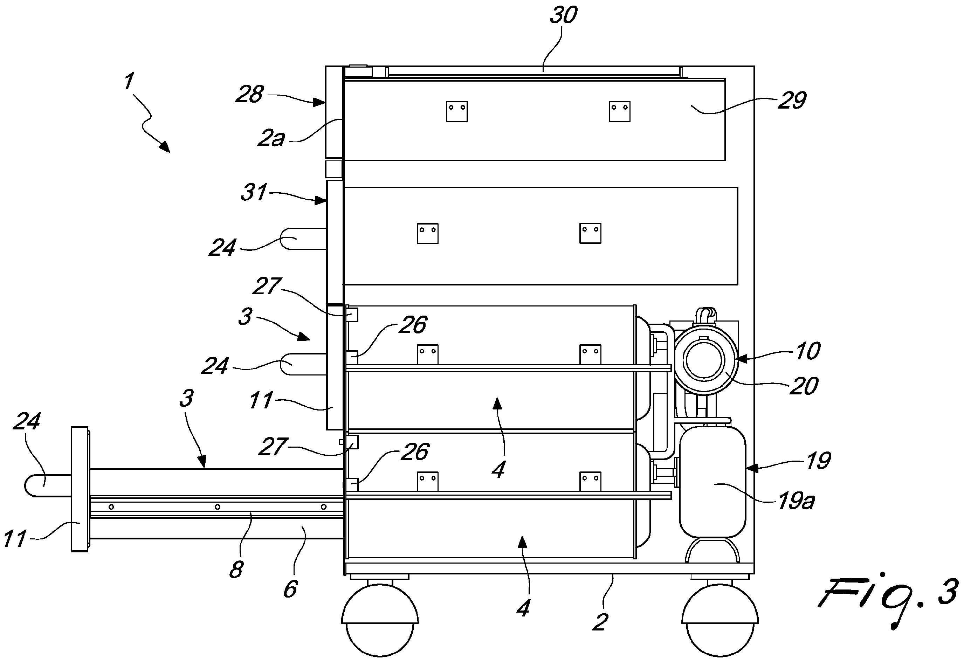

Figure 3 is a side view of the apparatus according to the invention with a side panel removed;

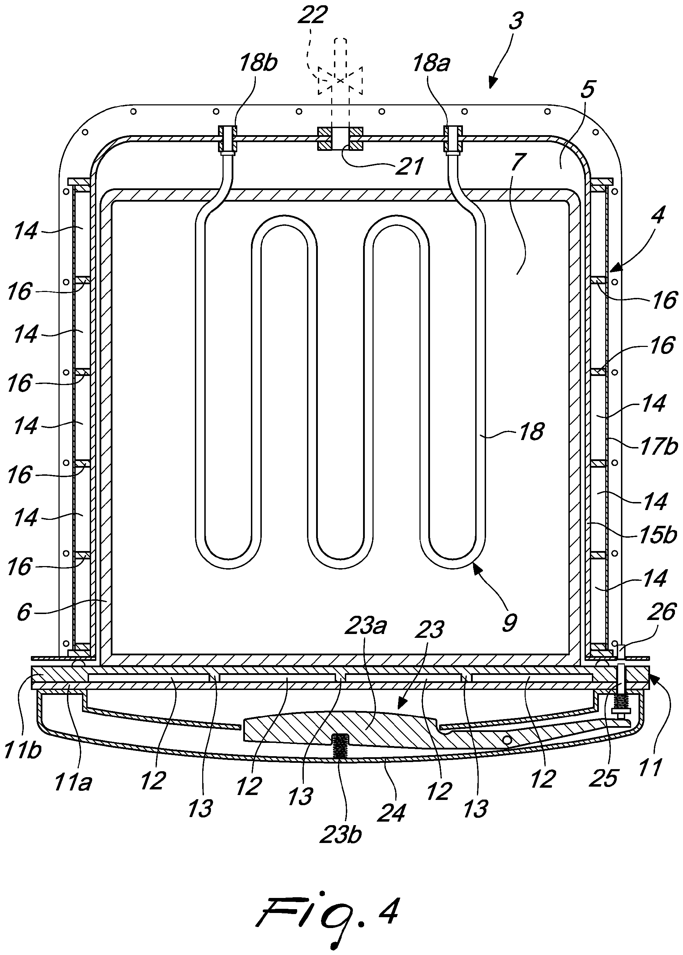

Figure 4 is a cross-sectional view taken along a horizontal plane of one preservation unit of the apparatus according to the invention;
Figure 5 is an exploded side view of one preservation unit of the apparatus according to the invention;
Figure 6 is a perspective view of a specific embodiment of the apparatus according to the invention;
Figure 7 is a perspective view of the embodiment of Figure 6 from which a containment and supporting body has been removed.

With reference to the figures, the apparatus for preserving food products, according to the invention, generally designated by the reference numeral 1, comprises a supporting structure 2 for at least one or more preservation units 3, each one of which comprises a box-like enclosure 4, which is fastened to the supporting structure 2 and defines internally a compartment 5, which is open toward one side 2a of the supporting structure 2, which corresponds to its front side.

Each preservation unit 3 comprises, furthermore, a drawer-like container body 6, which defines, in turn, at least one receptacle 7 which is open upward in order to accommodate inside it at least one food product to be preserved.

In particular, the container body 6 is slideably movable with respect to the box-like enclosure 4, so that it can be moved between a closed condition, in which it is inserted in the compartment 5, and an open condition, in which it is at least partially extracted from the compartment 5 in order to allow access to the receptacle 7. The sliding of the container body 6 with respect to the box-like enclosure 4 is obtained, conveniently, by way of longitudinal guides 8 which are fastened to the container body 6.

Also according to the invention, accommodated in the compartment 5 are cooling means 9, which allow to keep the compartment 5 and, as a consequence, the receptacle 7 and the food products placed in it, at low temperatures when the container body 6 is in the closed condition.

The compartment 5, furthermore, can be connected to vacuum generation means 10 which allow to evacuate the air from the compartment 5 and, therefore, from the receptacle 7, once the container body 6 is arranged in the closed condition, so as to preserve the food products placed in the receptacle 7 from contact with air and from consequent deterioration of their organoleptic characteristics.

Advantageously, at least two preservation units 3 are mounted on the supporting structure 2 and are mutually superimposed.

Conveniently, the container body 6 of each preservation unit 3 has, at its end directed toward the side 2a of the supporting structure 2, a front wall 11 which is adapted to hermetically close the compartment 5, when the container body 6 is in the closed condition.

Preferably, the front wall 11 of the container body 6 is made of transparent material, so as to allow the food products placed in the receptacle 7 to be viewed from outside, and it is provided internally with at least one thermal insulation interspace 12, from which the air has been extracted, so as to be under a vacuum.

More specifically, the front wall 11 of the container body 6 is provided with a pair of panels 11a, 11b made of glass or polycarbonate, which face toward each other. One of such panels, for example the one designated by 11b, has, on its face directed toward the other panel, laterally adjacent recesses, which define respective thermal insulation interspaces 12 and which are separated from each other by raised portions 13, which provide stiffening ribs to counter the tensions that are transmitted to the front wall 11 as a result of the vacuum created in the compartment 5.

Conveniently, the box-like enclosure 4 is also provided with thermal insulation means which comprise one or more insulating chambers 14, which are defined in the thickness of the box-like enclosure 4 and from which the air has been extracted, so as to put them under a vacuum.

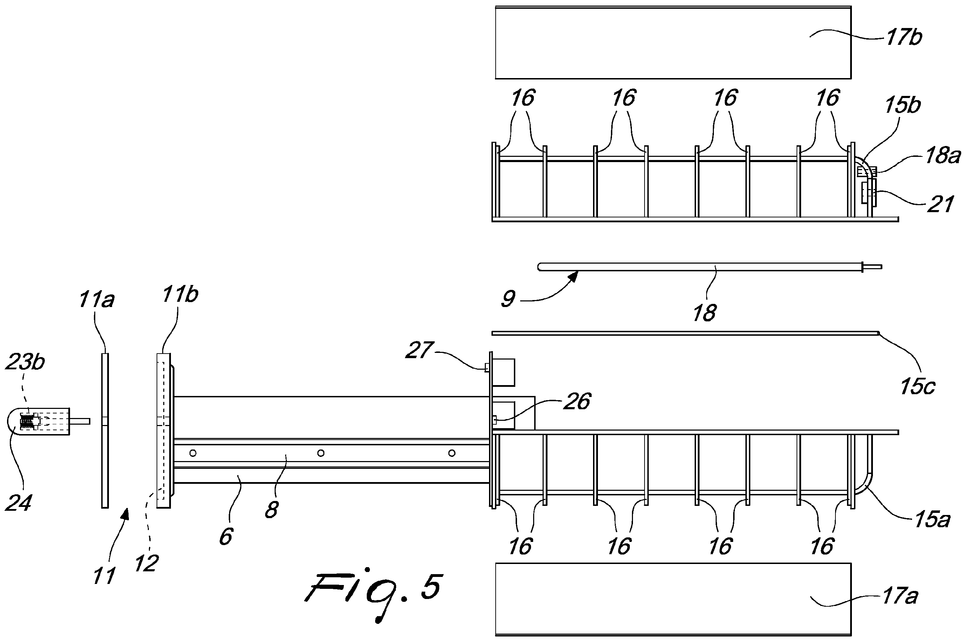

In more detail, as shown in particular in Figure 5, the box-like enclosure 4 is provided, preferably, by way of a pair of half-shells 15a and 15b, which are mutually opposite and coupled hermetically to each other, conveniently by way of the interposition of a gasket 15c between two joining flanges of the half-shells 15a, 15b.

Conveniently, the half-shells 15a, 15b are made using the same mold, so as to be substantially identical to each other and as a consequence to facilitate the construction of the apparatus.

Advantageously, the half-shells 15a, 15b, have on their outer surface, or extrados, a plurality of stiffening ribs 16 that give the half-shells 15a and 15b the mechanical strength necessary to withstand the tensions produced by the creation of the vacuum inside the compartment 5.

Conveniently, around the half-shells 15a and 15b a containment skirt is arranged, which is constituted, for example, by two mutually opposing parts made of sheet metal 17a and 17b, so as to provide, in the space comprised between the containment skirt and the half-shells 15a, 15b, the insulating chambers 14, which are, therefore, mutually separated by the stiffening ribs 16.

Advantageously, the cooling means 9 are constituted by at least one heat exchanger 18, constituted preferably by a coil, which is passed through internally by a cooling fluid that takes heat away from the compartment 5 by passing from the liquid phase to the gaseous phase, and is connected to a refrigeration unit 19 for the circulation of the cooling fluid, which is mounted on the supporting structure 2, externally to the box-like enclosure 4 of the preservation units 3.

More specifically, the heat exchanger 18 of each preservation unit 3 is, advantageously, connected to the refrigeration unit 19 by way of respective connecting tubes 18a, 18b which pass through the corresponding box-like enclosure 4.

Conveniently, the refrigeration unit 19 comprises a compressor 19a, which enables the circulation of the cooling fluid in the heat exchanger 18 and a condenser 19b, where the cooling fluid passes from the gaseous phase to the liquid phase, ceding heat to the outside environment.

The vacuum generation means 10 comprise, advantageously, at least one vacuum pump 20 which is mounted on the supporting structure 2. Preferably, there is a vacuum pump for each preservation unit 3.

The vacuum pump 20 is connected to the corresponding preservation unit 3 by way of a respective air extraction connector 21, which is connected to the corresponding box-like enclosure 4 and connected to the corresponding compartment 5.

Conveniently, the air extraction connector 21 of each preservation unit 3 is connected to a corresponding valve 22 that allows, on command, to connect the compartment 5 with the outside environment, in order to allow to restore the atmospheric pressure inside it, if the air has previously been extracted from the compartment 5 by way of the vacuum generation means 10.

The valve 22 can be controlled by actuation means 23 arranged at a handle 24 which is supported by the front wall 11 of the corresponding container body 6.

Conveniently, each valve 22 is provided by a solenoid valve and the actuation means 23 are, conveniently, constituted by an actuation lever 23a, which is mounted so that it can rotate with respect to the handle 24 and can be actuated manually, in contrast with a spring 23b, in order to push against a button 25, which is elastically loaded and adapted to actuate an electrical switch 26 for activating the valve 22.

Advantageously, the vacuum pump 20 can be activated automatically upon the transition of the container body 6 from the open condition to the closed condition. In particular, on each preservation unit 3 there is a control switch 27 for the vacuum pump 20, whose activation controls the activation of the vacuum pump 20. In particular, the control switch 27 is mounted on the box-like enclosure 4 so as to be engaged with, and as a consequence actuated by, the front panel 11 of the corresponding container body 6, when the latter reaches the closed condition.

Preferably, a unit for heating and/or cooking 28 the food products is mounted in the upper part of the supporting structure 2, and can be constituted by a basin 29, containing hot water in order to provide a cooking or heating of the food products using the bain-marie method, and can be closed in an upward region by way of covers 30 that are articulated to such basin.

It is optionally possible to also have a conventional machine for vacuum-packing food products, indicated by 31, in particular of the drawer-like type, mounted on the supporting structure 2 in a position vertically aligned with the preservation units 3.

It must be noted that the supporting structure 2 can be, advantageously, constituted by the frame of an item of furniture, such as an item of kitchen furniture or the like, and the preservation units 3 can be, conveniently, provided with dimensions adapted to their installation in the recesses of standard modules for making up the frame of the item of furniture.

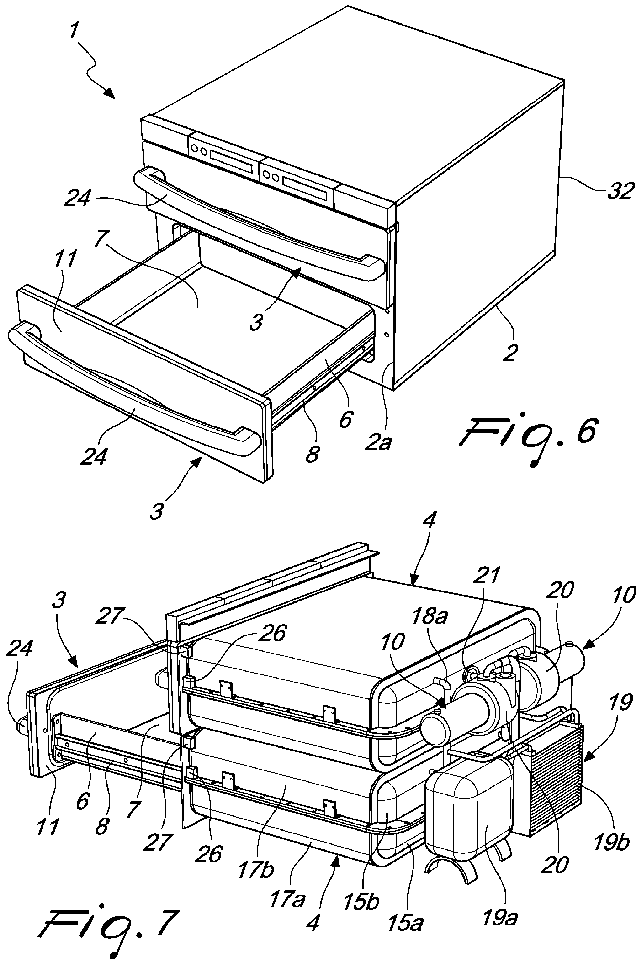

According to a possible embodiment, indicated in Figures 6 and 7, the supporting structure 2 can optionally be constituted by a containment and supporting body 32 that is shaped and dimensioned to provide a built-in or "fitted" module, to this end having the typical dimensions (600x450) of fitted elements, so as to be easily installable in the frame of a conventional item of kitchen furniture, such module being completely self-contained in that it comprises, in addition to one or more preservation units 3, a refrigeration unit 19, vacuum pumps 20 and corresponding electrical systems.

Use of the apparatus, according to the invention, is the following.

With the container body 6 of one preservation unit 3 in the open condition, the user places one or more food products to be preserved in the receptacle 7.

By sliding the container body 6 with respect to the box-like enclosure 4, the user brings the container body 6 to the closed condition.

In this manner, the front wall 11 will provide the hermetic seal of the compartment 5 of the box-like enclosure 4 and will engage with the control switch 27 so as to activate the vacuum pump 20, which, through the air extraction connector 21, will aspirate the air from the compartment 5, creating a vacuum inside the latter.

The heat exchanger 18 arranged in the compartment 5 will maintain the temperature of the compartment 5 and, therefore, of the receptacle 7 at levels adapted to the extended preservation of the food products.

When the user wants to retrieve the food products preserved in the receptacle 7, he or she grasps the handle 24 of the corresponding container body 6, actuating with the fingers the actuation lever 23a, which, acting on the button 25, will actuate the switch 26 to command the opening of the valve 22, consequently restoring atmospheric pressure in the compartment 5.

At this point, the user can extract the container body 6 from the compartment 5, by making it slide to the open condition, in which the user can access the receptacle 7 in order to retrieve the food products.

In practice it has been found that the invention fully achieves the intended aim and objects by providing an apparatus that is extremely simple in structure and very low cost, that allows to achieve an optimal preservation of food products.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102017000116730 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for preserving food products, which comprises a supporting structure (2) for at least one preservation unit (3), **characterized in that** said at least one preservation unit (3) comprises a box-like enclosure (4), which is fastened to said supporting structure (2) and defines internally a compartment (5) which is open toward one side (2a) of said supporting structure (2), and a container body (6), which defines at least one receptacle (7) which is open upward for the placement therein of at least one food product to be preserved, said container body (6) being slideably movable with respect to said box-like enclosure (4), between a closed condition, in which it is inserted in said compartment (5), and an open condition, in which it is at least partially extracted from said compartment (5) in order to allow access to said receptacle (7), said compartment accommodating cooling means (9) and being connectable to vacuum generation means (10).

2. The apparatus according to claim 1, **characterized in that** it comprises at least two preservation units (3) which are mutually superimposed on said supporting structure (2).

3. The apparatus according to one or more of the preceding claims, **characterized in that** said container body (6) has, at its end directed toward said side (2a) of said supporting structure (2), a front wall (11) which is adapted to hermetically close said compartment (5), when said container body (6) is in said closed condition.

4. The apparatus according to one or more of the preceding claims, **characterized in that** said front wall (11) is made of transparent material and is provided internally with at least one thermal insulation interspace (12) put in a vacuum condition.

5. The apparatus according to one or more of the preceding claims, **characterized in that** said box-like enclosure (4) comprises thermal insulation means which comprise at least one insulating chamber (14) put in a vacuum condition.

6. The apparatus according to one or more of the preceding claims, **characterized in that** said box-like enclosure (4) comprises a pair of half-shells (15a, 15b) which are mutually opposite and coupled hermetically to each other, said half-shells (15a, 15b) having, on their outer surface, a plurality of stiffening ribs (16), a containment skirt being arranged around said half-shells (15a, 15b) in order to define, in the space comprised between said containment skirt and said half-shells (15a, 15b), said at least one insulating chamber (14).

7. The apparatus according to one or more of the preceding claims, **characterized in that** said cooling means (9) comprise at least one heat exchanger (18), which is passed through internally by a cooling fluid and is connected to a refrigeration unit (19) for the circulation of said refrigeration fluid, which is mounted on said supporting structure (2), externally to said box-like enclosure (4).

8. The apparatus according to one or more of the preceding claims, **characterized in that** said vacuum generation means comprise at least one vacuum pump (20) which is connected to an air extraction connector (21), which is connected to said box-like enclosure (4) and is connected to said compartment (5).

9. The apparatus according to one or more of the preceding claims, **characterized in that** said air extraction connector (21) is connected to a valve (22) for restoring atmospheric pressure which can be controlled by actuation means (23) that are arranged at a handle (24) supported by said front wall (11).

10. The apparatus according to one or more of the preceding claims, **characterized in that** said vacuum pump (20) can be activated automatically upon the transition of said container body (6) from said open condition to said closed condition.

11. The apparatus according to one or more of the preceding claims, **characterized in that** a unit for heating and/or cooking (28) said food products is mounted in the upper part of said supporting structure.
